# EUROPEAN PATENT APPLICATION

(11) **EP 3 552 886 A1**
(43) Date of publication of application: **16.10.2019**
(21) Application number: 18166276.8
(22) Date of filing: 09.04.2018
(51) Int. Cl.: B60R 16/027

(54) **WIRELESS SENSOR INFERFACE FOR STEERING WHEEL**

(71) Applicant: IDT Europe GmbH, 01109 Dresden (DE)
(72) Inventor: JANISCH, Josef, 8262 Ilz (AT); BUCHINGER, Andreas, 3340 Waldhofen/Ybbs (AT)
(74) Representative: Lippert Stachow Patentanwälte Rechtsanwälte Partnerschaft mbB

(57) **Abstract**

The invention discloses a wireless sensor interface for a steering wheel. The object of the invention to overcome the problems according to the state-of-the art will be solved by a wireless sensor interface for a steering wheel with steering wheel components comprising on a transmitter side a wireless transmitter coil of a transmitter integrated circuit on a stationary printed circuit board; on a receiver side a wireless receiver coil of a receiver integrated circuit on a movable, rotating receiver printed circuit board, wherein the transmitter and receiver coils are mounted close to each other and concentric to a rotation axis of a steering column of the steering wheel, whereas an inductive coupling between the transmitter and receiver coils are used for wireless powering the steering wheel components and transmitting data of the steering wheel components back to the transmitter integrated circuit by means of modulating the received energy.

## Description

The invention relates to a wireless sensor interface for a steering wheel.

Existing solutions for sensing the input devices or steering wheel components on a steering wheel, e.g. pushbuttons, hands-off-detection sensor, use an electrical connection in the form of a clock spring cable in order to connect these devices to an external electronic steering control unit (ECU). Other applications using wireless RF technology to transmit data, but these applications require batteries for the transmitting unit.

The disadvantages of the existing solution are that the clock spring cable is prone to failure due to wear and tear and consumes a significant amount of space as well as external power supplies are needed.

It is therefore the object of the invention to provide an appropriate sensor interface by means of which the problems specified above are overcome.

The object of the invention will be solved by a wireless sensor interface for a steering wheel with steering wheel components comprising on a transmitter side
- a wireless transmitter coil of a transmitter integrated circuit on a stationary printed circuit board;
   on a receiver side
- a wireless receiver coil of a receiver integrated circuit on a movable, rotating receiver printed circuit board,
wherein the transmitter and receiver coils are mounted close to each other and concentric to a rotation axis of a steering column of the steering wheel, whereas an inductive coupling between the transmitter and receiver coils are used for wireless powering the steering wheel components and transmitting data of the steering wheel components back to the transmitter integrated circuit by means of modulating the received energy. This is realized by means of modulation the load impedance on the receiver.

The communication is based in load (impedance) modulation at the receiver side and messages are received and detected as a modulation of the signal level on the transmitter side.

The invention proposal is based on the idea to use a wireless charging chip-set as a wireless sensor in a moving device, such as a steering wheel, to transmit power and data without the need of a physical electrical connection between a stationary device, e.g. the car body and a movable device, e.g. a steering wheel. The advantage is that no electrical connections between the transmitter and receiver side are necessary as well as the use of a battery or other powering components become redundant. Therefore, the failure to mechanical components such as clock spring cable can be significantly reduced.

A wireless transmitter integrated circuit (IC) is mounted on a stationary printed circuit board (PCB). The stationary printed circuit board can also be considered as a first printed circuit board. It transmits power from the transmitter coil to a movable, rotating PCB containing a receiver coil, a wireless receiver IC and a microcontroller along with other optional electronic components. The movable, rotating PCB can also be considered as a secondary rotating printed circuit board. Both transmit and receive coils are mounted close to each other and concentric to the rotation axis of the steering column and steering wheel such that the inductive coupling between the transmit and receive coils remains intact, even if the receiving coil is rotating relative to the stationary transmitting coil.

The steering wheel comprises steering wheel components such as pushbuttons, hands-off-detection sensor. These components are part of the steering wheel.

In an embodiment of the present invention the receiver coil is rotatable arranged relative to the transmitter coil, whereas the transmitter coil inducing a secondary voltage in the receiver coil. Therefore, the electronics on the secondary rotating printed circuit board (PCB) can be powered wirelessly.

In another embodiment of the inventive wireless sensor interface a microcontroller is constructed on the rotating printed circuit board for controlling and processing the steering wheel components. The information on the input devices, hence the steering wheel components, is processed by the microcontroller and fed to the wireless receiver IC.

In an embodiment, the microcontroller is powered by the induced secondary voltage. On the receiving side which is mechanically connected to the steering wheel and rotating with it, the secondary voltage induced in the receiving coil is connected to the wireless receiver IC which generates a supply voltage for a microcontroller mounted on the same PCB. The microcontroller is connected to the input devices on the steering wheel, such as pushbuttons, a hand-free-detection sensor or other electronic devices.

In another preferred embodiment, the receiver side is mechanically connected to the steering wheel and rotating with it. This has the advantage that a voltage can be induced between the stationary transmitter side and the movable and/or rotatable receiver side due to the law of induction and hence no other external power supply has to be used. Rather, the power for the rotating secondary PCB is supplied from the wireless transmitter circuit.

In a preferred embodiment a back channel is formed between the receiver integrated circuit and the transmitter integrated circuit, whereas the back channel is used to transmit the data of the steering wheel components back to the wireless transmitter coil through modulation of receiving energy. The information on the input devices, hence the steering wheel components, is processed by the microcontroller and fed to the wireless receiver IC which transmits the data back to the wireless transmitter through modulation of the receiving energy (back channel).

In an embodiment of the invention the transmitter integrated circuit is connected to an electrical control unit for further data processing. Data processing means that the transmitted data by the steering wheel contains information such as: steering angle, multi-turn information, steering wheel torque, steering wheel pushbutton status, hands-off sensor status, etc. This information is used for safety-related features such as Electronic Stability Protection (ESP), steering torque assists for the Electric Power Steering (EPS) motor or entertainment controls (e.g. car radio volume, telephony) or cruise control push buttons (e.g. ACC - adaptive cruise control), shifting gears for automatic transmission systems and controlling the vehicle infotainment system.

In a further embodiment of the invention the steering wheel components comprise pushbuttons, a hand-off-detection sensor or other electric devices. These devices are arranged along the steering wheel for controlling components of the car like the radio for example. These devices are also used for detecting if the driver has the hands on the steering wheel or not.

The invention will be explained in more detail using an exemplary embodiment.

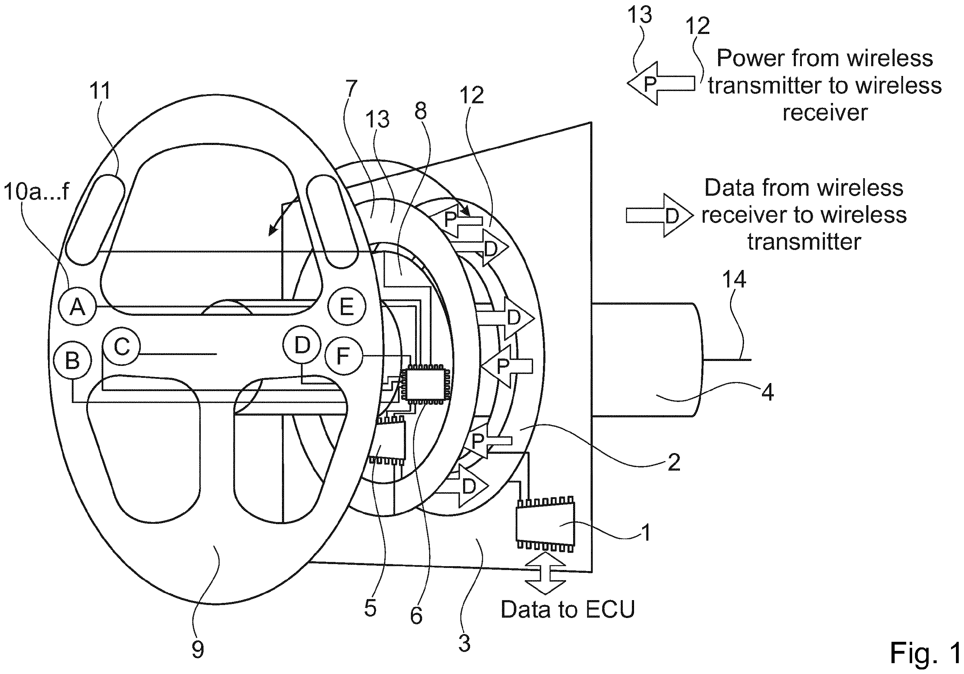

The appended drawing shows
- Fig. 1: Inventive wireless sensor interface for a steering wheel.

Figure 1 shows the inventive wireless sensor interface for a steering wheel. A wireless transmitter integrated circuit 1 is mounted on a stationary printed circuit board 3. It transmits power from the transmitter coil 2 to a movable, rotating PCB 8 containing a receiver coil 7. Both coils 2, 7 are mounted close to each other and concentric to the rotation axis of the steering column 4 and steering wheel 9 such that the inductive coupling between the coils 2, 7 remains intact, even if the receiving coil 7 is rotating relative to the stationary transmitter coil 2.

On the receiving side, which is mechanically connected to the steering wheel and rotating with it, the secondary voltage induced in the receiving coil 7 is connected to the wireless receiver IC 5 which further generates a supply voltage for a microcontroller 6. The microcontroller 6 is connected to the input devices on the steering wheel 9, such as pushbuttons (10a...f), a hand-off-detection sensor 11 with hand-off-detection sensor electrodes or other electronic devices.

The information on the input devices 10, 11 is processed by the microcontroller 6 and fed to the wireless receiver IC 5 which transmits the data back to the wireless transmitter 1 through modulation of the receiving energy (back channel).

The wireless transmitter 1 is connected to an electrical control unit (ECU) for further data processing.

### Reference signs

- 1: wireless transmitter integrated circuit
- 2: transmitter coil
- 3: stationary printed circuit board
- 4: steering column
- 5: wireless receiver integrated ciruit
- 6: microcontroller
- 7: receiver coil
- 8: movable, rotating printed circuit board
- 9: steering wheel
- 10: pushbutton or array of pushbuttons
- 11: hand-off-detection circuit
- 12: transmitter side
- 13: receiver side
- 14: rotating axis

## Claims

1. Wireless sensor interface for a steering wheel (9) with steering wheel components (10, 11) comprising on a transmitter side (12)
- a wireless transmitter coil (2) of a transmitter integrated circuit (1) on a stationary printed circuit board (3);
on a receiver side (13)
- a wireless receiver coil (7) of a receiver integrated circuit (5) on a movable, rotating receiver printed circuit board (8),
wherein the transmitter (2) and receiver coils (7) are mounted close to each other and concentric to a rotation axis (14) of a steering column (4) of the steering wheel 9), whereas an inductive coupling between the transmitter (2) and receiver coils (7) are used for wireless powering the steering wheel components (10, 11) and transmitting data of the steering wheel components (10, 11) back to the transmitter integrated circuit (1) by means of modulating the received energy.

2. Wireless sensor interface according to claim 1, wherein the receiver coil (7) is rotatable arranged relative to the transmitter coil (2), whereas the transmitter coil (2) inducing a secondary voltage in the receiver coil (7) .

3. Wireless sensor interface according to claim 1, wherein a microcontroller (6) is constructed on the rotating printed circuit board (8) for controlling and processing the steering wheel components (10, 11).

4. Wireless sensor interface according to one of the claims 1 to 3, wherein the microcontroller (6) is powered by the induced secondary voltage.

5. Wireless sensor interface according to claim 1, wherein the receiver side (13) is mechanically connected to the steering wheel (9) and rotating with it.

6. Wireless sensor interface according to one of the former claims, wherein a back channel is formed between the receiver integrated circuit (5) and the transmitter integrated circuit (1), whereas the back channel is used to transmit the data of the steering wheel components (10, 11) back to the wireless transmitter coil (2) through modulation of receiving energy.

7. Wireless sensor interface according to one of the former claims, wherein the transmitter integrated circuit (2) is connected to an electrical control unit for further data processing.

8. Wireless sensor interface according to one of the former claims, wherein the steering wheel components (10, 11) comprise pushbuttons, a hand-off-detection sensor or other electric devices.
